# EUROPEAN PATENT APPLICATION

(11) **EP 3 133 855 A1**
(43) Date of publication of application: **22.02.2017**
(21) Application number: 14889496.7
(22) Date of filing: 17.04.2014
(51) Int. Cl.: H04W 16/14, H04W 28/16, H04W 72/08

(54) **FREQUENCY ALLOCATION APPARATUS, FREQUENCY ALLOCATION METHOD, AND WIRELESS COMMUNICATION SYSTEM**

(71) Applicant: Fujitsu Limited, Kawasaki-shi, Kanagawa 211-8588 (JP)
(72) Inventor: ANDO, Kazuaki, Kawasaki-shi Kanagawa 211-8588 (JP); SEKI, Hiroyuki, Kawasaki-shi Kanagawa 211-8588 (JP)
(74) Representative: Haseltine Lake LLP
(86) International application number: PCT/JP2014/060969
(87) International publication number: WO 2015/159411

(57) **Abstract**

A selection unit configured to select a first propagation scheme when a distance over which a radio wave transmitted from a transmission device in the second system at a frequency not used by the first system can travel from a position of the transmission device is greater than a threshold, and select a second propagation scheme resulting in a propagation distance smaller than a propagation distance of the first propagation scheme when the distance over which the radio wave can travel is smaller than the threshold. A determination unit configured to calculate a propagation distance of the transmission radio wave by using a propagation scheme selected by the selection unit, and to determine that the second system can utilize the transmission radio wave when a propagation distance of the transmission device does not reach a propagation scope of a radio wave of a frequency that can be used by the first system.

## Description

### FIELD

The embodiments discussed herein are related to a technique of sharing a frequency.

### BACKGROUND

Cognitive radio is a frequency sharing technique that allows one frequency to be shared and utilized by a plurality of systems. In recent years, introduction of a frequency sharing technique has been discussed in Japan. A frequency sharing technique realizes a situation where a vacant channel in a television (TV) broadcasting frequency band for example can be used without a license. A vacant channel in a TV broadcasting frequency band is referred to as a television white space (TVWS). In Europe, institutionalization and standardization have already started for systems that utilize television white spaces. Note that TV broadcasting is referred to as a primary system and a communication system utilizing a white space is referred to as a secondary system in Europe.

The Federal Communications Commission of the United States has standardized a method of utilizing an assignment device for utilizing white spaces for communications. An assignment device performs a calculation of an electric field intensity by using a prescribed propagation model so as to determine whether or not a radio wave from the secondary system is interfering with the primary system. The assignment device receives position information of the base station of the secondary system from the user who is using the secondary system, and performs determination of interference on the basis of whether or not a radio wave is interfering with a radio wave of the primary system from the received position. The user using the secondary system obtains, from the assignment device, information of a channel (frequency) in which a radio wave output from the base station of a secondary system does not interfere with the primary system, and thereby can utilize the channel of a white space.

In order to determine whether or not a radio wave of the secondary system is interfering with a radio wave of the primary system, the assignment device uses a prescribed propagation model so as to calculate a propagation distance of a radio wave of the secondary system. In order to make the propagation distance of a radio wave output from the secondary system closer to the actual propagation distance, the propagation model takes into consideration an influence of obstructions such as buildings etc. around the base station of the secondary system. However, accurate calculations of propagation distances that take buildings into consideration are difficult and consume a long period of time.

As a technique related to an assignment device, a technique of calculating which white space can be used is known (see Patent Document 1 for example).

As a technique related to an assignment device, a technique of determining whether or not a white space can be utilized by using a propagation gain between the base station and a receiver station is known (see Patent Document 2 for example).

A technique of calculating a distance over which communications are possible between antennas, by using the transmission power, the free space propagation loss, etc. is known (see Patent Document 3 for example).

As a technique related to a white space, a technique of allowing an LTE to use a TV white space is known (see Patent Document 4, for example).
Patent Document 1: Japanese National Publication of International Patent Application No. 2013-531437
Patent Document 2: International Publication Pamphlet No. WO 2011-132760
Patent Document 3: Japanese Laid-open Patent publication No. 2005-130442
Patent Document 4: Japanese National Publication of International Patent Application No. 2012-516585

### SUMMARY

In a communication system in which a second system utilizes a radio wave of a frequency that is among radio waves of frequencies usable to a first system and that is not used by the first system in terms of time or space, a frequency assignment device includes a selection unit and a determination unit. The selection unit selects a first propagation scheme when a distance over which a radio wave transmitted from a transmission device in the second system at a frequency not used by the first system can travel from a position of the transmission device without being blocked by an obstruction is greater than a prescribed threshold. The selection unit selects a second propagation scheme resulting in a propagation distance smaller than a propagation distance of the first propagation scheme when the distance over which the radio wave can travel is smaller than the prescribed threshold. The determination unit calculates a propagation distance of the transmission radio wave by using a propagation scheme selected by the selection unit, and determines that the second system can utilize the transmission radio wave when a propagation distance of the transmission device does not reach a propagation scope of a radio wave of a frequency that can be used by the first system.

### BRIEF DESCRIPTION OF DRAWINGS

FIG. 1 illustrates an example of an assignment device according to the present embodiment;
FIG. 2 illustrates an example of a hardware configuration of the assignment device;
FIG. 3 illustrates examples of hardware configurations of a base station device and a wireless communication terminal;
FIG. 4 illustrates an example of a communication system according to the present embodiment;
FIG. 5 illustrates an example of an estimation process of a Line-of-sight Distance (first);
FIG. 6 illustrates an example of a method of simplifying an estimation process of a Line-of-sight Distance;
FIG. 7 illustrates an example of a method of determining a threshold used for selecting a propagation model;
FIG. 8 is a flowchart illustrating an example of processes performed by the assignment device; and
FIG. 9 illustrates an example of an estimation process of a Line-of-sight Distance (second).

### DESCRIPTION OF EMBODIMENTS

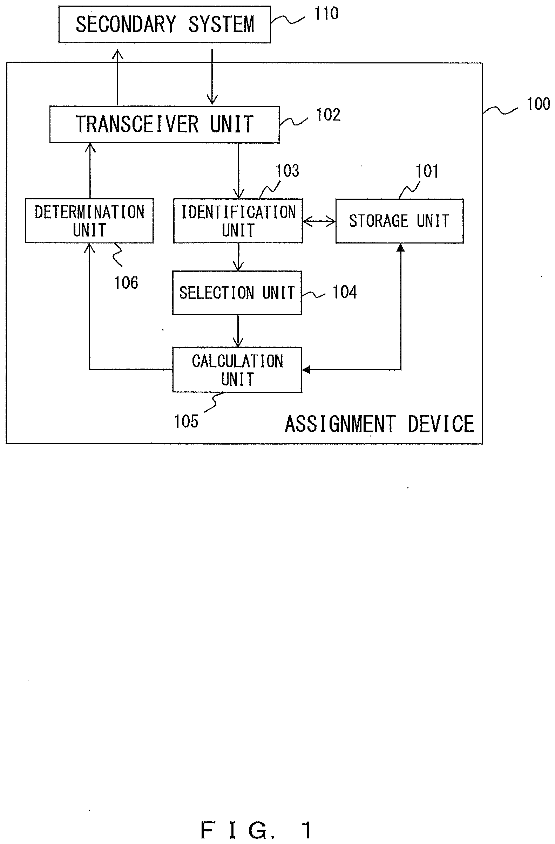

Hereinafter, detailed explanations will be given for the present embodiment by referring to the drawings. FIG. 1 illustrates an example of an assignment device according to the present embodiment. An assignment device 100 stores a map database containing information related to obstructions such as a building around the base station of the secondary system in a storage unit 101 in advance. The information related to obstructions contained in the map database is for example topography information, and an arrangement, heights, sizes, etc. of buildings. Also, the storage unit 101 stores information related to the position, the height, the size of the base station of the primary system, information related to a radio wave used by the base station, etc. A transceiver unit 102 is used as an interface for the assignment device to communicate with other systems.

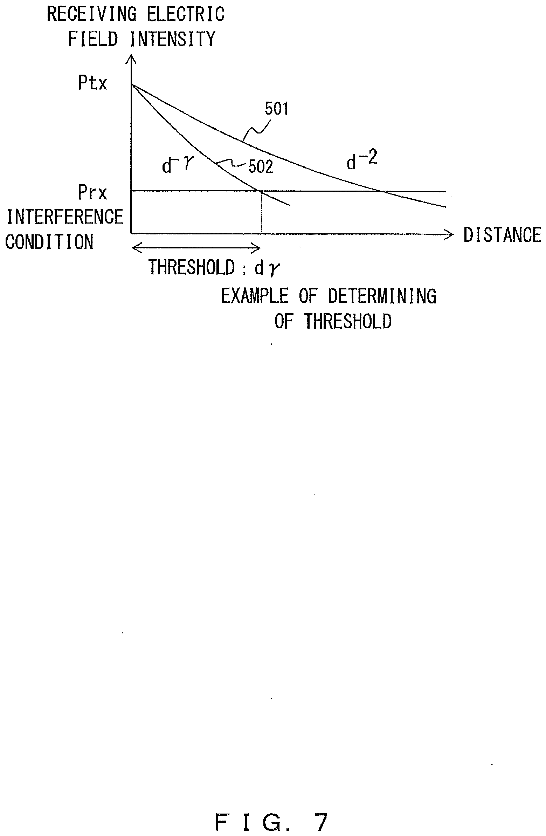

Hereinafter, sequential explanations will be given for the processes performed in the assignment device when the user utilizes the secondary system.
(1) The transceiver unit 102 receives height information, position information, output information, etc. relating to the base station of the secondary system from the secondary system that desires to use a white space of the primary system. The information related to the secondary system is transmitted from the base station of the secondary system in wireless communications. Also, the information related to the secondary system may be input to the assignment device 100 by the user.
(2) An identification unit 103 obtains the map database from the storage unit 101. The identification unit 103 uses the position and height of the base station of the secondary system obtained in (1) and the information related to obstructions around the base station contained in the map database so as to identify the longest Line-of-sight Distance of the 360 degrees around the base station (maximum Line-of-sight Distance). A Line-of-sight Distance is a distance over which a radio wave output from the base station can travel without being influenced by an obstruction such as a topographical feature, a building, etc.
(3) A selection unit 104 compares an index value and a prescribed threshold, the index value being the maximum Line-of-sight Distance identified by the identification unit 103, so as to select a propagation model used for estimating the propagation distance. When the maximum Line-of-sight Distance is greater than a prescribed threshold, the selection unit 104 selects a propagation model such as a square attenuation model as a propagation model used for estimating the propagation distance. A square attenuation model is a model having a radio wave that attenuates in inverse proportion to the square of the distance from the source.
   When the maximum Line-of-sight Distance is smaller than the prescribed threshold, the selection unit 104 selects a propagation model having a propagation distance smaller than that of the square attenuation model, for the propagation model used for estimating the propagation distance. An example of a propagation model having a propagation distance smaller than that of a square attenuation model is an Okumura-Hata curve. An Okumura-Hata curve is a propagation property approximation expression generated statistically by obtaining pieces of data that were actually measured in suburbs, small and medium cities, and large cities. An Okumura-Hata curve is a 3.5-th power attenuation model. An Okumura-Hata curve is a propagation model having a propagation distance smaller than that of a square attenuation model because it is a model in which a radio wave attenuates in inverse proportion to the 3.5-th power of the distance from the source. A method of obtaining a prescribed threshold used by the selection unit 104 will be explained in FIG. 7.
(4) A calculation unit 105 uses the propagation model selected by the selection unit 104 so as to calculate a propagation distance of a radio wave output from the base station of the secondary system.
(5) A determination unit 106 uses the position information of the base station of the secondary system and the propagation distance of a radio wave so as to determine whether or not a radio wave output from the base station of the secondary system interferes with a radio wave of the primary system. When a radio wave output from the base station from the secondary system interferes with a radio wave of the primary system, the determination unit 106 reports, to the transceiver unit 102, information indicating that it is not possible to utilize the secondary system. When a radio wave of the base station of the secondary system does not interfere with a radio wave of the primary system, the determination unit 106 reports, to the transceiver unit 102, information indicating that it is possible to utilize the secondary system at the received position of the base station of the secondary system.
(6) The transceiver unit 102 reports the determination result by the determination unit 106 to the secondary system side. When it is possible to utilize the secondary system, the user can utilize the base station of the secondary system at the position transmitted in (1). Because it is possible to utilize the secondary system, it becomes possible to use for example a wireless communication terminal utilizing the secondary system in a scope of a distance over which a radio wave of the secondary system can travel.

By using a simple index of a Line-of-sight Distance, the assignment device can simplify a calculation of a propagation distance of a radio wave output from the secondary system while taking obstructions into consideration in the processes of (1) through (6) by the assignment device.

Note that the propagation model having a propagation distance smaller than that of a square attenuation model may be a model that includes reflection, diffraction, etc. caused by buildings or topography features in calculations. Also, when the amount of measurement data based on measured values has increased in response to an increase of the utilization of the secondary system, the selection unit may use a propagation model approximate to the measured values. The map database stored in the storage unit 101 may be updated periodically. The map database may be updated each time a building is built or demolished.

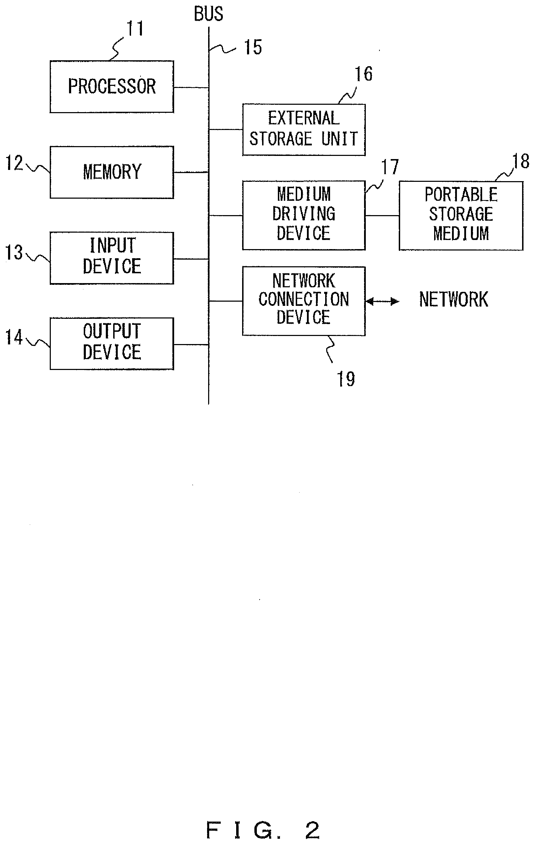

FIG. 2 illustrates an example of a hardware configuration of the assignment device. The assignment device 100 includes a processor 11, a memory 12, a bus 15, an external storage unit 16, and a network connection device 19. Optionally, the assignment device 100 may further include an input device 13, an output device 14 and a medium driving device 17. The assignment device 100 may be implemented by for example a computer.

The processor 11 may be an arbitrary processing circuit including a central processing unit (CPU). The processor 11 operates as the identification unit 103, the selection unit 104, the calculation unit 105 and the determination unit 106. Note that the processor 11 can execute a program stored in for example the external storage unit 16. The memory 12 operates as the storage unit 101 and holds the map database and information related to the primary system. Further, the memory 12 also stores data obtained through operations by the processor 11 or data used for processes by the processor 11 on an as-needed basis. The network connection device 19 is used for communications with other devices and operates as the transceiver unit 102.

The input device 13 is implemented as for example a button, a keyboard, a mouse, etc., while the output device 14 is implemented as a display etc. The bus 15 connects the processor 11, the memory 12, the input device 13, the output device 14, the external storage unit 16, the medium driving device 17 and the network connection device 19 to each other so that data can be exchanged between them. The external storage unit 16 stores a program, data, etc. and provides stored data to the processor 11 etc. on an as-needed basis. The medium driving device 17 can output data in the memory 12 or the external storage unit 16 to a portable storage unit 18, and can also read a program, data etc. from the portable storage unit 18. In this example, the portable storage unit 18 may be an arbitrary portable storage medium including a Magneto-Optical (MO) disk, a Compact Disc Recordable (CD-R), and a Digital Versatile Disk Recordable (DVD-R).

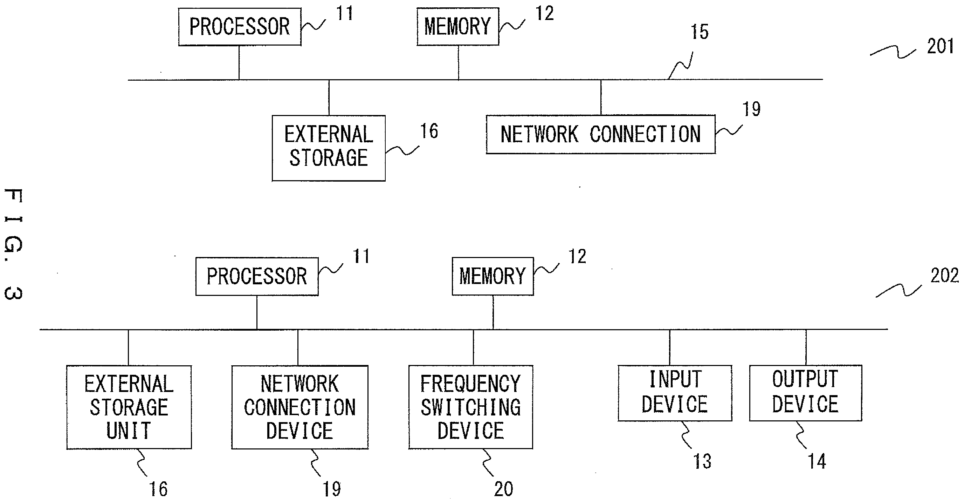

FIG. 3 illustrates examples of hardware configurations of a base station device and a wireless communication terminal. In FIG. 3, hardware members similar to those illustrated in FIG. 2 are denoted by the same numerals. A base station device 201 includes the processor 11, the memory 12, the bus 15, the external storage unit 16 and the network connection device 19. The base station device 201 may be implemented by for example a computer. The processor 11 performs a process in which for example it inquires of the assignment device 100 whether or not the assignment device 100 can be used. The memory 12 stores process data used in the inquiry process on an as-needed basis. The network connection device 19 is used for communications with other devices.

A wireless communication terminal 202 includes a frequency switching device 20 in addition to those included in the base station 201. The frequency switching device 20 switches radio waves used by the wireless communication terminal within the scope of radio waves of the primary system and within the scope of radio waves of the secondary system.

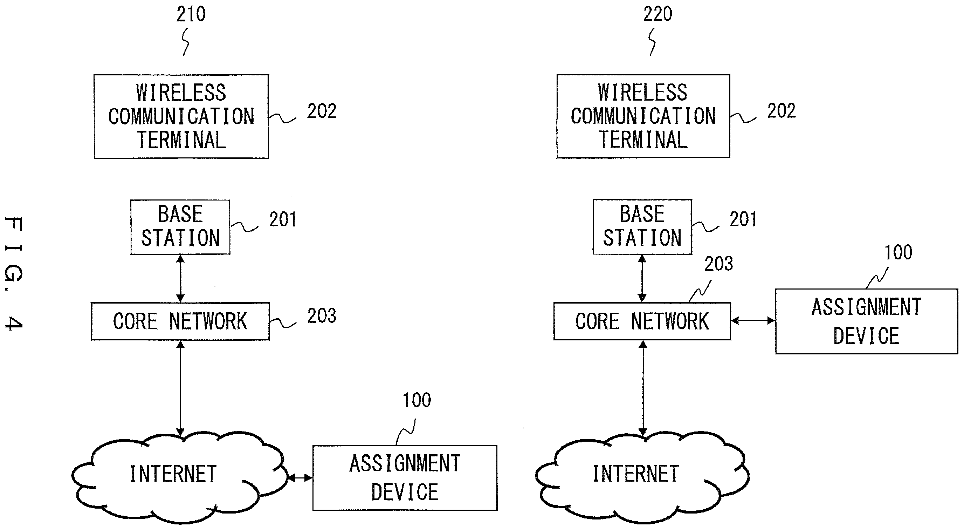

FIG. 4 illustrates an example of a communication system according to the present embodiment. For example, the assignment device 100 is utilized by being connected to the Internet similarly to a communication system 210. An inquiry, made by the base station 201 of the secondary system, regarding whether or not the system can be used is transmitted to a core network 203 and is reported to the assignment device 100 via the Internet. The core network 201 is used for communications between the base station 201 and other base stations. Upon receiving a report indicating that the utilization is possible from the assignment device 100, the base station 201 becomes able to communicate with the wireless communication terminal 202.

Also, the assignment device 100 may be utilized by being connected to the core network 203 similarly to a communication system 220. An inquiry, made by the base station 201 of the secondary system, regarding whether or not the system can be used, is reported to the assignment device 100 via the core network 203. Upon receiving a report indicating that the utilization is possible from the assignment device 100, the base station 201 becomes able to communicate with the wireless communication terminal 202.

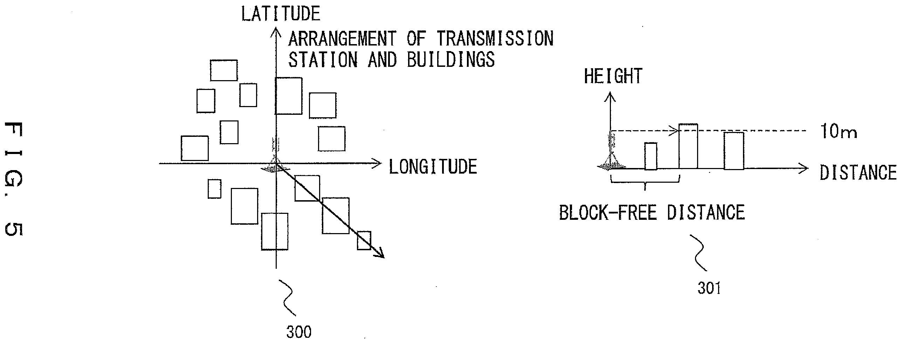

FIG. 5 illustrates an example of an estimation process of a Line-of-sight Distance. Upon obtaining position information from the base station of the secondary system, the assignment device reads the map database from the storage unit 101. A map 300 illustrated in FIG. 5 is a map image generated by using building information read from the base station of the secondary system and the map information. The map 300 is a map in which buildings are arranged around the base station with the vertical and horizontal axes representing the latitude and longitude, respectively. The map database contains height information of the buildings.

A section 301 is a view of a map, seen from the side, of a propagation direction of a radio wave corresponding to the arrow pointing in the south east direction on the map 300 having the base station as its center. On the section of the map 300 having the base station as its center, the vertical and horizontal axes represent the height information of each building and distances from the base station, respectively. In the example of the section 301 there are three buildings, and the building closest to the base station is lower than the base station. Accordingly, the building closest to the base station does not block radio waves from the base station. The building second closest to the base station on the section 301 is higher than the base station, blocking radio waves from the base station. Accordingly, the Line-of-sight Distance of a radio wave output in the direction denoted by the arrow on the map 300 is estimated to be the distance between the base station and the building second closest to the base station. The assignment device performs the estimation process of the Line-of-sight Distance over 360 degrees around the base station.

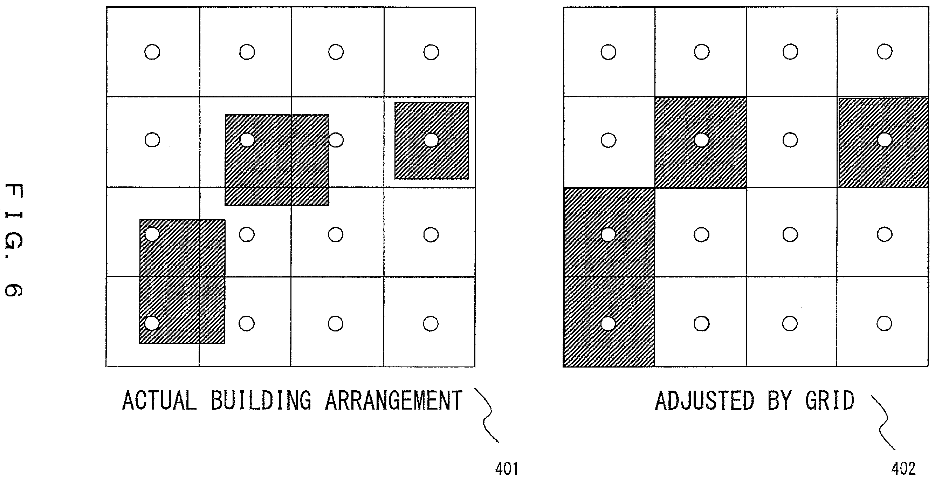

FIG. 6 illustrates an example of a method of simplifying an estimation process of a Line-of-sight Distance. The map 300 illustrated in FIG. 5 is generated when arrangement information of buildings is obtained from the actual map information. An arrangement diagram 400 illustrated in FIG. 6 is an arrangement example of buildings in a case when the map 300 is represented in a form of a grid. In the arrangement diagram 400, buildings are represented by shaded quadrilaterals. In the arrangement diagram 400, each building is shifted from the frames of the grid. The assignment device arranges these buildings in accordance with the frames of the grid as depicted by a grid arrangement diagram 401.

In the grid arrangement diagram 401, the buildings are arranged in grid frames. The assignment device estimates the Line-of-sight Distance around the base station on an assumption that the center point of each grid frame is a building. The assignment device assumes the center point of each grid frame to be a building, and thereby can estimate a Line-of-sight Distance without taking the shapes and sizes of the buildings into consideration. Estimating a Line-of-sight Distance by the use of a map in a form of a grid can reduce the amount of calculations compared with calculations of a Line-of-sight Distance by the use of a map not in a form of a grid. While narrowing the grid width makes it possible to generate a map that accurately represents the actual arrangement of the buildings and increase the accuracy in estimating a Line-of-sight Distance, it increases the amount of calculations. Also, while a map with a greater grid width results in a greater shift from the actual building arrangement and a lower accuracy in estimating a Line-of-sight Distance, it can reduce the amount of calculations.

FIG. 7 illustrates an example of a method of determining a threshold used for selecting a propagation model. The graph illustrated in FIG. 7 illustrates attenuation curves of radio waves in accordance with distances of propagation models, with the vertical and horizontal axes representing receiving electric field intensities and distances from transmission sources of radio waves, respectively. Receiving electric field intensity is an intensity of transmission power of a radio wave received from the transmission source of the radio wave. In the example illustrated in FIG. 7, the base station transmits a radio wave with the intensity of (Pₜₓ). When there are no obstructions, a radio wave output from the base station attenuates in inverse proportion (d⁻²) to the square of the distance from the source as depicted by the square attenuation model illustrated as the curve 501.

In the process of (3), the selection unit 104 calculates a prescribed threshold used for a propagation model by using a radio wave output from the base station in the square attenuation model depicted by the curve 501 as the electric field intensity (Pᵣₓ) that interferes with a radio wave used by the base station of the primary system. Because a square attenuation model is a propagation model having a long propagation distance, a radio wave of a propagation model having a propagation distance smaller than that of a square attenuation model does not interfere with radio waves used by the primary system when the electric field intensity is treated as the electric field intensity (Pᵣₓ) as an interference condition.

The curve 502 is a propagation model (d-γ) having a propagation distance smaller than that of the square attenuation model. The selection unit 104 sets, as a prescribed threshold, a distance (dγ) over which a radio wave that attenuates in a propagation model (d-γ) having a propagation distance smaller than that of a square attenuation model with electric field intensity (Pᵣₓ) can travel. Note that propagation model (d-γ) denotes an r-th power attenuation model.

The selection unit can select a propagation model in accordance with a Line-of-sight Distance by obtaining a prescribed threshold. When a Line-of-sight Distance is small, radio waves are blocked by an obstruction, and accordingly the assignment device uses a propagation model having a propagation distance smaller than that of the square attenuation model for calculating the propagation distance of a radio wave. Also, when the Line-of-sight Distance is greater than a prescribed threshold, the assignment device uses a square attenuation model for calculating the propagation distance of a radio wave. By the above configuration, the assignment device can simplify a calculation of the propagation distance of a radio wave output from the secondary system while taking obstructions into consideration, by using a simple index, i.e., a Line-of-sight Distance.

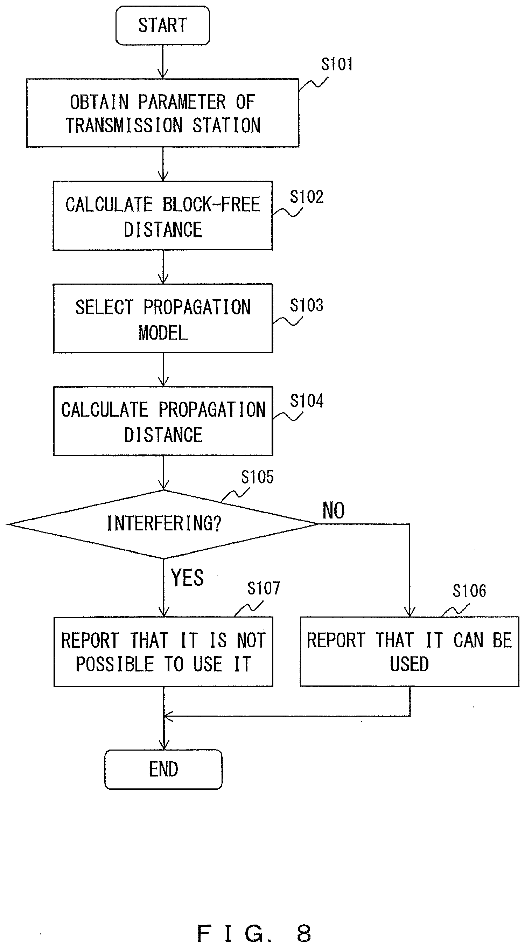

FIG. 8 is a flowchart illustrating an example of processes performed by the assignment device. The identification unit 103 obtains information related to the position and height of the base station of the secondary system and information related to obstructions around the base station contained in the map database. The identification unit 103 calculates Line-of-sight Distances over 360 degrees around the base station, and identifies the maximum Line-of-sight Distance (step S102). The selection unit 104 selects a propagation model in accordance with the maximum Line-of-sight Distance (step S103). The calculation unit 105 uses the propagation model selected by the selection unit 104 so as to calculate the propagation distance of a radio wave output from the base station of the secondary system (step S104). The determination unit 106 uses the position information of the base station of the secondary system and the propagation distance of radio waves so as to determine whether or not a radio wave output from the base station of the secondary system interfere with radio waves of the primary system (step S105). The transceiver unit 102 reports to the base station of the secondary system that the system can be utilized (No in S105). The transceiver unit 102 reports to the base station of the secondary system that it is not possible to utilize the system (Yes in S105).

Thereby, by using a simple index, i.e., a Line-of-sight Distance, the assignment device can simplify a calculation of the propagation distance of a radio wave output from the secondary system while taking obstructions into consideration.

### <Others>

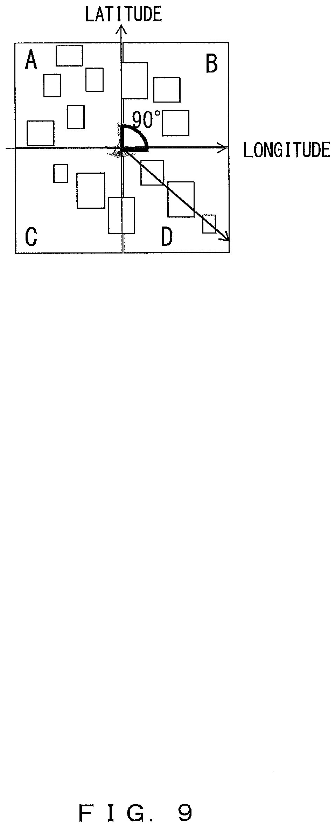

FIG. 9 illustrates an example of an estimation process of a Line-of-sight Distance (second). FIG. 9 is a map in which the map 300 illustrated in FIG. 5 is divided into areas, each being of 90 degrees. The assignment device calculates Line-of-sight Distances over 360 degrees around the base station. However, in some cases, depending upon the location of the base station, respective directions will have Line-of-sight Distances that are greatly different from each other. In such a case, the assignment device may divide the area by 90 degrees around the base station and identify the maximum Line-of-sight Distance for each of the areas. Also, an arbitrary number of the divisional areas may be employed in accordance with the environment.

Next, the selection unit may select a propagation model by using an index other than a Line-of-sight Distance. An example of an index for selecting a propagation model may be the occupancy of buildings. In such a case, when a base station is to be located in a district where the occupancy of buildings is high, the selection unit is to select a propagation model having a propagation distance smaller than a radio wave of a square attenuation model.

## Claims

1. A frequency assignment device (100) used for a communication system in which a second system utilizes a radio wave of a frequency that is among radio waves of frequencies usable to a first system and that is not used by the first system in terms of time or space, the frequency assignment device (100) comprising:
a selection unit (104) configured to select a first propagation scheme when a distance over which a radio wave transmitted from a transmission device in the second system at a frequency not used by the first system can travel from a position of the transmission device without being blocked by an obstruction is greater than a prescribed threshold, and to select a second propagation scheme resulting in a propagation distance smaller than a propagation distance of the first propagation scheme when the distance over which the radio wave can travel is smaller than the prescribed threshold; and
a determination unit (106) configured to calculate a propagation distance of the transmission radio wave by using a propagation scheme selected by the selection unit (104), and to determine that the second system can utilize the transmission radio wave when a propagation distance of the transmission device does not reach a propagation scope of a radio wave of a frequency that can be used by the first system.

2. The frequency assignment device (100) according to claim 1, wherein
the selection unit (104):
obtains an intensity of transmission power of the transmission device that makes a propagation distance of the transmission radio wave from the transmission device obtained by using the first propagation scheme reach a propagation scope of a radio wave of a frequency that can be used by the first system; and
calculates a distance over which the transmission radio wave output from the transmission device with the intensity of the transmission power can travel by using the second propagation scheme so as to use a calculated distance as the prescribed threshold.

3. The frequency assignment device (100) according to claim 1 or 2, comprising
an identification unit (103) configured to calculate a distance over which the transmission radio wave can travel from a position of the transmission device without being blocked by an obstruction, for a plurality of directions around the transmission device.

4. A frequency assignment method used for a communication system in which a second system utilizes a radio wave of a frequency that is among radio waves of frequencies usable to a first system and that is not used by the first system in terms of time or space, the frequency assignment method comprising:
selecting a first propagation scheme when a distance over which a radio wave transmitted from a transmission device in the second system at a frequency not used by the first system can travel from a position of the transmission device without being blocked by an obstruction is greater than a prescribed threshold, and selecting a second propagation scheme resulting in a propagation distance smaller than a propagation distance of the first propagation scheme when the distance over which the radio wave can travel is smaller than the prescribed threshold; and
calculating a propagation distance of the transmission radio wave by using a selected propagation scheme, and determining that the second system can utilize the transmission radio wave when a propagation distance of the transmission device does not reach a propagation scope of a radio wave of a frequency that can be used by the first system.

5. The frequency assignment method according to claim 4, comprising:
obtaining an intensity of transmission power of the transmission device that makes a propagation distance of the transmission radio wave from the transmission device obtained by using the first propagation scheme reach a propagation scope of a radio wave of a frequency that can be used by the first system; and
calculating a distance over which the transmission radio wave output from the transmission device with the intensity of the transmission power can travel by using the second propagation scheme so as to use a calculated distance as the prescribed threshold.

6. The frequency assignment method according to claim 4 or 5, comprising
calculating a distance over which the transmission radio wave can travel from a position of the transmission device without being blocked by an obstruction, for a plurality of directions around the transmission device.

7. A frequency assignment system comprising:
a second system utilizing a radio wave of a frequency that is among radio waves of frequencies usable to a first system and that is not used by the first system in terms of time or space; and
a frequency assignment device (100) that is configured:
to select a first propagation scheme when a distance over which a radio wave transmitted from a transmission device in the second system at a frequency not used by the first system can travel from a position of the transmission device without being blocked by an obstruction is greater than a prescribed threshold, and to select a second propagation scheme resulting in a propagation distance smaller than a propagation distance of the first propagation scheme when the distance over which the radio wave can travel is smaller than the prescribed threshold; and
to calculate a propagation distance of the transmission radio wave by using a selected propagation scheme, and to determine that the second system can utilize the transmission radio wave when a propagation distance of the transmission device does not reach a propagation scope of a radio wave of a frequency that can be used by the first system.

8. The frequency assignment system according to claim 7, wherein
the frequency assignment device (100):
obtains an intensity of transmission power of the transmission device that makes a propagation distance of the transmission radio wave from the transmission device obtained by using the first propagation scheme reach a propagation scope of a radio wave of a frequency that can be used by the first system; and
calculates a distance over which the transmission radio wave output from the transmission device with the intensity of the transmission power can travel by using the second propagation scheme so as to use a calculated distance as the prescribed threshold.

9. The frequency assignment system according to claim 7 or 8, wherein
the frequency assignment device (100) calculates a distance over which the transmission radio wave can travel from a position of the transmission device without being blocked by an obstruction, for a plurality of directions around the transmission device.
